# DEMANDE DE BREVET EUROPEEN

(11) **EP 2 506 567 A1**
(43) Date de publication de la demande: **03.10.2012**
(21) Numéro de dépôt: 12161574.4
(22) Date de dépôt: 27.03.2012
(51) Int. Cl.: H04N 5/783, H04N 21/432, H04N 21/658, H04N 21/845

(54) **Procédé et dispositif d'accès à un contenu diffusé enregistré**

(30) Priorité: 28.03.2011 FR 1152541
(71) Demandeur: France Telecom, 75015 Paris (FR)
(72) Inventeur: Berrani, Sid Ahmed, 35135 CHANTEPIE (FR)

(57) **Abrégé**

L'invention se rapporte à un procédé d'accès à un contenu multimédia enregistré à partir d'un flux multimédia diffusé. Selon l'invention, le procédé est adapté à recevoir, après diffusion d'une portion dudit contenu, au moins un index temporel servant à repérer ladite portion dans le flux enregistré et à restituer au moins une partie dudit contenu enregistré, à partir de ou jusqu'à une position dans ledit contenu enregistré déduite d'un dit index temporel.

L'invention concerne également un serveur (S) mettant en oeuvre le procédé d'accès à un contenu multimédia

## Description

L'invention se rapporte au domaine de la télévision, et plus particulièrement de l'accès à des programmes de télévision enregistrés au cours de leur diffusion.

Des dispositifs connus permettent à des utilisateurs de programmer et d'enregistrer les programmes de télévision. Ces dispositifs sont par exemple des enregistreurs numériques personnels généralement appelés PVR pour 'Personal Video Recorder' en anglais ou DVR pour 'Digital Video Recorder' en anglais. Dans ces dispositifs, un enregistrement d'un programme peut être commandé de deux façons : soit en spécifiant une chaine, une date et une plage horaire, soit en utilisant une grille de programmation, plus particulièrement un guide électronique de programme, dans laquelle l'utilisateur sélectionne le programme qu'il souhaite enregistrer. Dans ce dernier cas, la chaine, la date et les horaires de début et de fin du programme sont récupérés directement à partir du guide électronique de programme disponible via une interface du dispositif.

Les horaires de début et de fin de diffusion d'un programme de télévision fournis par les chaînes de télévision sont approximatifs. De plus, les guides de programmes ne sont pas mis à jour en cas de modification de dernière minute de la programmation. Dans le cas où l'horaire de début d'enregistrement demandé est postérieur à l'horaire réel de début de diffusion, le fichier vidéo enregistré ne contient pas une partie du début du programme. De même, si l'horaire de fin d'enregistrement demandé est antérieur à l'horaire réel de fin de diffusion, le fichier vidéo enregistré ne contient pas une partie de la fin du programme.

Pour pallier ce problème, certains systèmes augmentent la plage horaire d'enregistrement par exemple en ajoutant 10 minutes avant l'horaire de début annoncé pour la diffusion et/ou 10 minutes après l'horaire de fin annoncé. Ceci permet d'obtenir le programme complet mais augmente sensiblement le volume de flux enregistré.

Le flux vidéo enregistré contient alors une partie de contenu non souhaité.

Lors de la lecture de l'enregistrement, si l'utilisateur ne veut pas voir ce contenu supplémentaire non souhaité, il doit se synchroniser manuellement sur le début réel du programme, par exemple en utilisant la touche 'avance rapide' d'une télécommande associée au dispositif.

Cette technique de synchronisation manuelle peut également être utilisée par l'utilisateur pour supprimer de l'enregistrement, la ou les parties de contenu supplémentaire.

Cependant, cette manipulation est fastidieuse et peu précise.

Il existe donc un besoin de simplifier et d'améliorer la précision de l'accès à des parties définies d'un contenu obtenu par enregistrement d'un programme diffusé, par exemple l'accès au début effectif du contenu ou à toute autre position dans le contenu correspondant à un événement donné relatif à ce contenu.

L'invention vient améliorer la situation.

A cet effet, l'invention propose un procédé d'accès à un contenu multimédia enregistré à partir d'un flux multimédia diffusé conforme à la revendication.

Selon l'invention, le procédé d'accès comporte les étapes suivantes :
- réception, après diffusion d'une portion dudit contenu, d'au moins un index temporel servant à repérer ladite portion dans le flux multimédia diffusé, ledit au moins un index temporel étant défini après le début de l'enregistrement dudit contenu multimédia;
- restitution d'au moins une partie dudit contenu enregistré, à partir de et/ou jusqu'à une position dans ledit contenu multimédia enregistré déduite d'un dit index temporel.

Des index temporels repérant une portion du contenu enregistré à partir d'un flux diffusé, par exemple le début d'une portion de contenu, sont reçus. Un tel index temporel prend en compte l'heure réelle de diffusion de cette portion de contenu et/ou la position réelle de cette portion de contenu et permet ainsi de repérer précisément la portion en question dans le contenu enregistré à partir du flux diffusé.

Lors de la restitution du contenu, ces index temporels permettent de déterminer une position dans le contenu enregistré à partir de laquelle et/ou jusqu'à laquelle doit avoir lieu la restitution du contenu.

Le contenu enregistré contient des portions souhaitées, par exemple un film, et des portions non souhaitées, par exemple de la publicité ou des portions du flux diffusé avant le début et/ou après la fin du film. Grâce aux index temporels, seules les portions souhaitées sont restituées.

Les index temporels évitent ainsi à l'utilisateur d'utiliser les fonctions basiques d'avance et retour rapides pour se positionner sur les portions souhaitées

Avantageusement, le contenu enregistré n'est pas modifié. Ainsi, il est également possible d'obtenir la restitution du contenu sans prendre en compte les index reçus.

Selon une caractéristique particulière du procédé d'accès, l'index temporel sert à repérer le début de ladite portion dudit contenu et la restitution commence à une position dans ledit contenu déduite dudit index temporel.

Ainsi, l'utilisateur peut facilement accéder au début d'une portion du contenu, par exemple au début d'une émission de télévision telle qu'un film ou un journal télévisé.

Selon une caractéristique particulière utilisée seule ou en combinaison avec la caractéristique précédente, l'index temporel sert à repérer la fin de ladite portion et la restitution s'arrête à une position dans ledit contenu déduite dudit index temporel.

Ainsi, lors de la détection d'une fin d'une portion de contenu, la restitution est interrompue, évitant ainsi des manipulations par l'utilisateur.

Selon une caractéristique du procédé d'accès, l'index temporel sert à repérer le début et la fin de ladite portion et la restitution commence à une première position dans ledit contenu déduite dudit index temporel et s'arrête à une deuxième position dans ledit contenu déduite dudit index.

Un index contenant des informations relatives au début et à la fin d'une portion permet à un dispositif de lecture de déduire respectivement une position de début et une position de fin associée. L'association de positions de début et de fin est particulièrement adaptée aux contenus contenant plusieurs portions organisées de façon hiérarchique, par exemple un documentaire contenant des chapitres et des sous chapitres et permet une navigation aisée dans le contenu lors de sa restitution.

Selon un mode de réalisation particulier du procédé d'accès, l'étape de réception comprend en outre la réception d'au moins un index temporel servant à repérer une partie de contenu à ne pas restituer et en ce que, lors de la restitution, ladite partie de contenu n'est pas restituée.

Un tel index temporel permet par exemple de repérer une portion de contenu indésirable insérée entre deux parties de contenu, par exemple une plage de publicité, et de ne pas la restituer.

Selon un mode de réalisation du procédé d'accès, l'index est déterminé à partir d'une information sur l'instant de diffusion effective de la portion de contenu ou sur l'endroit d'insertion effectif de la portion de contenu dans le flux diffusé.

Selon une caractéristique particulière, l'index temporel est défini après le début de la diffusion de ladite portion.

Les index temporels sont déterminés à partir du flux diffusé, plus précisément en fonction des horaires réels de diffusion des contenus du flux et non pas en fonction des horaires prévus pour la diffusion de ces contenus. Ainsi, un index temporel relatif à une portion de contenu ne peut donc être défini qu'après le début de diffusion de cette portion. Un index relatif à la fin d'une portion ne peut être défini qu'après la diffusion de cette portion. Les index temporels prennent ainsi en compte les décalages d'horaires dans la diffusion des contenus.

Selon une caractéristique particulière, l'index temporel est défini par une durée écoulée lors de ladite diffusion par rapport à un instant prédéterminé.

Un instant prédéterminé est soit un instant connu d'un dispositif de réception recevant les index et d'un dispositif de transmission transmettant ces index, par exemple l'horaire prévu pour la diffusion du contenu, soit un instant transmis au dispositif de transmission par le dispositif de réception, par exemple le début de l'enregistrement du contenu diffusé. Il est alors simple pour le dispositif de réception de déduire une position dans le contenu enregistré correspondant à l'index.

Ainsi, il n'est pas nécessaire que les horloges des dispositifs de réception et de dispositif déterminant les index soient synchronisées.

Selon une caractéristique particulière, l'index temporel est défini par un nombre d'images dans ledit contenu calculé par rapport à une image prédéterminée dudit contenu enregistré.

Un index temporel défini par un nombre d'images permet de déduire très précisément une position dans le contenu enregistré.

Selon une autre caractéristique particulière, l'index temporel est une date.

L'utilisation d'une date, qui est un horaire absolu, pour définir des index permet la réception d'index identiques par des dispositifs de réception différents ayant enregistré un même contenu. Chaque dispositif de réception déduit ensuite une ou plusieurs positions des index reçus en fonction du contenu enregistré et notamment du début de l'enregistrement du contenu.

Selon un mode de réalisation particulier, le procédé d'accès comporte en outre une étape d'envoi, avant le début de l'enregistrement dudit contenu, d'une requête d'index temporel contenant un instant prédéterminé utilisé pour définir au moins un index temporel.

L'envoi de la requête avant le début de l'enregistrement d'un contenu qui doit être diffusé permet au dispositif en charge de la détermination des index de commencer la détermination des index dès le début de la diffusion de ce contenu.

La transmission dans la requête d'un instant prédéterminé servant à la détermination des index permet la synchronisation entre le dispositif de réception et le dispositif en charge de la détermination des index.

Selon un autre mode réalisation particulier, le procédé d'accès comporte en outre une étape d'envoi d'une requête d'index temporel contenant un identifiant d'une image dudit contenu enregistré utilisé pour définir au moins un index temporel.

Un identifiant d'une image, par exemple, un identifiant de la première image enregistrée pour le flux diffusé, permet d'obtenir un repère temporel précis et commun entre le dispositif recevant les index et le dispositif calculant ces index. L'utilisation d'un identifiant d'images permet une détermination précise de l'index et, en conséquence de la position déduite de l'index.

Selon un mode de réalisation particulier du procédé d'accès, l'étape de réception comprend la réception d'au moins une information complémentaire associée à l'index temporel.

Une telle information complémentaire est par exemple un identifiant de type d'index ou un titre de la portion. Les informations complémentaires reçues peuvent ensuite être affichées pour permettre à un utilisateur de sélectionner une portion à restituer.

Selon un mode de réalisation du procédé d'accès, ledit au moins un index temporel est reçu dans une commande de restitution émise par un terminal distant.

L'invention se rapporte également à un procédé de commande de restitution d'un contenu multimédia enregistré à partir d'un flux multimédia diffusé **caractérisé en ce qu'**il comporte les étapes suivantes :
- réception d'au moins un index temporel servant à repérer une portion dudit contenu dans le flux multimédia diffusé, ledit au moins un index temporel étant défini après le début de l'enregistrement dudit contenu multimédia;
- transmission d'une commande de restitution d'au moins une partie dudit contenu à partir de et/ou jusqu'à une position dans ledit contenu déduite d'un dit index temporel, ladite commande de restitution contenant ladite position.

L'invention concerne également un dispositif d'accès à un contenu multimédia enregistré à partir d'un flux diffusé **caractérisé en ce qu'**il comporte :
- des moyens de réception d'au moins un index temporel servant à repérer une portion dudit contenu dans le flux multimédia diffusé contenu, ledit au moins un index temporel étant défini après le début de l'enregistrement dudit contenu multimédia;
- des moyens de restitution d'au moins une partie dudit contenu enregistré, à partir de et/ou jusqu'à une position dans ledit contenu multimédia enregistré déduite d'un dit index temporel.

L'invention se rapporte également à un terminal (T) **caractérisé en ce qu'**il comprend :
- des moyens de réception d'au moins un index temporel servant à repérer une portion dudit contenu dans le flux multimédia diffusé, ledit au moins un index temporel étant défini après le début de l'enregistrement dudit contenu multimédia;
- des moyens de transmission d'une commande de restitution d'au moins une partie d'un contenu multimédia enregistré à partir d'un flux multimédia diffusé, à partir de et/ou jusqu'à une position dans ledit contenu déduite d'un dit index temporel, ladite commande de restitution contenant ladite position.

L'invention concerne enfin un produit programme d'ordinateur comprenant des instructions pour mettre en oeuvre les étapes d'un procédé d'accès à un contenu multimédia tel que décrit précédemment, lorsqu'il est chargé et exécuté par un processeur.

L'invention concerne enfin un produit programme d'ordinateur comprenant des instructions pour mettre en oeuvre les étapes d'un procédé de commande de restitution d'un contenu multimédia tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma bloc illustrant un système selon un mode de réalisation de l'invention,
- la figure 2 est un organigramme illustrant les différentes étapes d'un procédé d'accès selon un premier mode de réalisation,
- la figure 3 représente un exemple d'index obtenus pour un contenu selon un premier mode de réalisation,
- la figure 4 est un organigramme illustrant les différentes étapes d'un procédé d'accès selon un deuxième mode de réalisation,
- la figure 5 représente un exemple d'index obtenus pour un contenu selon un deuxième mode de réalisation,
- la figure 6 est un organigramme illustrant les différentes étapes d'un procédé d'accès selon un troisième mode de réalisation,
- la figure 7 représente un exemple d'index obtenus pour un contenu selon un troisième mode de réalisation,
- la figure 8 est un schéma bloc illustrant un système selon un deuxième mode de réalisation de l'invention,
- la figure 9 est un organigramme illustrant les différentes étapes d'un procédé d'accès, respectivement d'un procédé de commande de restitution, selon un quatrième mode de réalisation.

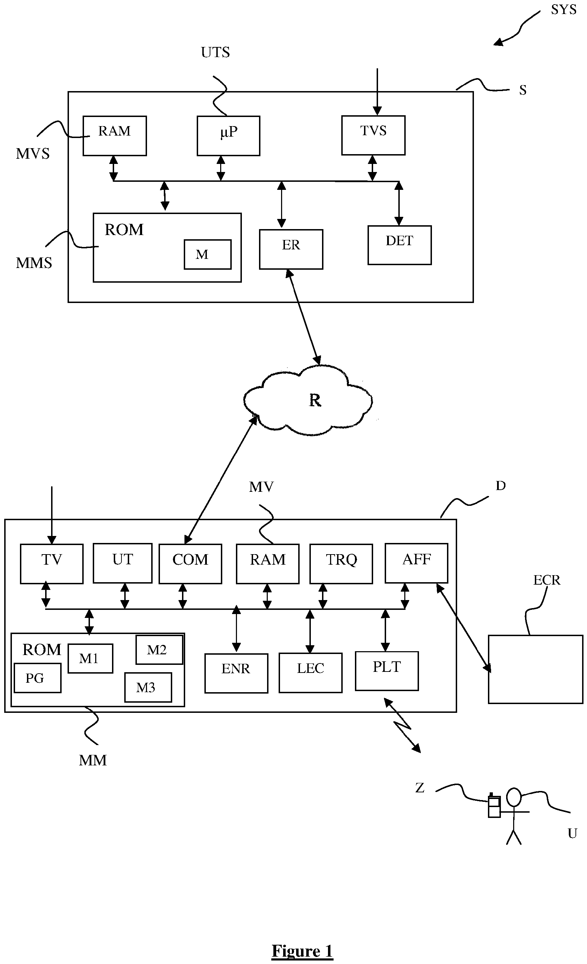

La figure 1 illustre le contexte général de l'invention.

En référence à la figure 1, un système SYS comprend un serveur S, un dispositif d'accès D et un écran ECR, par exemple un écran de téléviseur, apte à être connecté au dispositif D.

Le dispositif D est par exemple un enregistreur numérique personnel, par exemple un PVR, un DVR ou encore un dispositif connu sous le nom de STB (pour 'Set Top Box' en anglais).

Le dispositif D comporte de façon connue, notamment une unité de traitement UT équipée d'un microprocesseur, une ou plusieurs mémoires mortes MM de type ROM ou EEPROM, une mémoire vive MV de type RAM.

Une mémoire MM est par exemple un disque dur intégré dans le dispositif D ou accessible par le dispositif D.

Le dispositif D comporte également un module TV apte à recevoir un flux multimédia diffusé en continu via un canal de diffusion, par exemple, par une ou plusieurs chaines de télévision.

De manière connue, la composition exacte en termes de contenus multimédia d'un tel flux n'est pas connue à l'avance, certains programmes pouvant durer plus ou moins longtemps que prévu ou bien être ajoutés / supprimés, ce qui induit un décalage de l'instant initial de diffusion d'un programme diffusé ultérieurement. En conséquence, l'instant initial de diffusion via ce flux multimédia d'un contenu donné n'est pas connu avec précision tant que la diffusion n'a pas commencé effectivement.

De façon connue, un tel flux multimédia est reçu par le dispositif D au moyen par exemple d'une antenne satellite, une ligne téléphonique, une fibre optique ou encore un câble de type Ethernet.

Le dispositif D comporte également un module d'enregistrement ENR, un module de lecture LEC, un module de pilotage PLT, un module de restitution AFF, un module de traitement de requêtes TRQ et un module de communication COM avec un serveur S distant via un réseau de télécommunications R.

Le module de pilotage PLT est apte à recevoir des commandes en provenance d'une télécommande Z associée au dispositif D et à disposition d'un utilisateur U. Le module de pilotage PLT est également apte à commander l'exécution des commandes reçues.

A titre d'alternative, les commandes sont transmises par l'utilisateur au dispositif D par l'intermédiaire d'une interface de saisie d'un poste de télévision, un ordinateur ou encore un téléphone mobile.

Le module d'enregistrement ENR est apte à enregistrer, en temps réel, dans une mémoire MM, un contenu multimédia à partir d'un flux diffusé reçu par le module de réception TV, en fonction d'une commande d'enregistrement reçue par le module de pilotage PLT.

Le module de lecture LEC est apte à accéder à un contenu, soit un contenu reçu par le module de réception TV, soit un contenu enregistré dans la mémoire MM, et à le transmettre pour restitution au module de restitution AFF. De façon connue, la restitution d'un contenu multimédia consiste en l'affichage d'un contenu vidéo et/ou la restitution d'un signal audio.

Le module de restitution AFF est notamment apte à restituer un contenu reçu du module de lecture LEC sur l'écran ECR.

Le module de traitement de requêtes TRQ est apte à construire des requêtes d'index, à les transmettre au serveur S via le module de communication COM et à traiter les réponses aux requêtes reçues via le module de communication COM.

La mémoire morte MM comporte des registres mémorisant un programme d'ordinateur PG

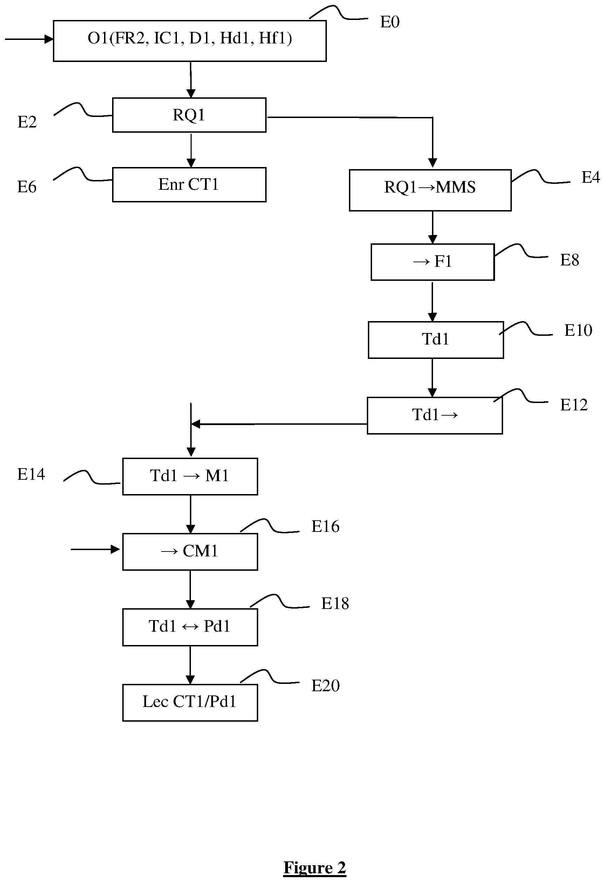

L'unité de traitement UT est pilotée par le programme informatique PG afin de mettre en oeuvre notamment le procédé d'accès selon un des modes de réalisation de l'invention décrits ultérieurement en référence aux figures 2, 4 et 6.

Le programme informatique PG comporte des instructions de code pour mettre en oeuvre notamment les étapes de réception d'au moins un index temporel servant à repérer une portion dudit contenu dans un contenu multimédia enregistré à partir d'un flux multimédia diffusé et de restitution d'au moins une partie dudit contenu enregistré, à partir de et/ou jusqu'à une position dans ledit contenu multimédia enregistré déduite d'un dit index temporel.

Le serveur S comporte de façon connue, notamment une unité de traitement UTS équipée d'un microprocesseur, une ou plusieurs mémoires mortes de type ROM ou EEPROM MMS, une mémoire vive de type RAM MVS.

Le serveur S comporte également un module TVS de réception d'un flux multimédia diffusé, un module de détermination d'index temporels DET et un module de communication ER apte à dialoguer avec le dispositif d'accès D, via le réseau de télécommunication R.

Un premier mode de réalisation de l'invention mis en oeuvre dans le système SYS va maintenant être décrit en référence à la figure 2.

Lors d'une première étape E0, l'utilisateur U commande, par exemple au moyen de la télécommande Z, l'enregistrement par le dispositif D d'un contenu C1. Le contenu C1 est par exemple un film. Le contenu C1 est choisi dans un guide de programme électronique au moyen d'une interface graphique affichée sur l'écran ECR par le dispositif D.

Par l'exemple, le film C1 doit être diffusé sur un canal de diffusion, par exemple la chaîne de télévision FR2, à une date D1, à partir d'un instant Hd1 et jusqu'à l'instant Hf1.

Un ordre d'enregistrement O1 est créé par le module de pilotage PLT et enregistré dans une mémoire du dispositif D. L'ordre d'enregistrement O1 contient un identifiant de la chaîne, par exemple FR2, un identifiant IC1 du contenu C1 à enregistrer, la date D1, l'instant de début Hd1 et l'instant de fin Hf1.

L'identifiant IC1 est par exemple le titre du film.

A titre d'alternative, l'ordre d'enregistrement O1 ne contient pas l'instant de fin Hf1 mais une durée d'enregistrement.

A titre d'alternative, l'ordre d'enregistrement O1 ne contient pas d'identifiant de contenu à enregistrer. Ce cas est particulièrement adapté lorsque le contenu demandé C1 est une succession de plusieurs programmes télévisés, par exemple, un film , un documentaire et un journal télévisé.

Encore à titre d'alternative, l'ordre d'enregistrement O1 contient des informations permettant d'identifier un canal de diffusion, une date et une plage temporelle d'enregistrement.

L'étape E0 est suivie d'une étape E2 lors de laquelle, le module de traitement de requêtes TRQ construit une requête RQ1 d'index temporels pour le contenu C1 et le module de communication COM transmet la requête RQ1 au serveur S.

La requête RQ1 comporte des informations permettant au serveur S d'identifier le contenu C1. Par exemple, la requête RQ1 contient l'identifiant de canal, une date et un horaire de diffusion.

La requête RQ1 est par exemple construite selon le format 'ShowView' défini par exemple à l'adresse Internet `http://fr.wikipedia.org/wiki/ShowView'.

A titre d'alternative, les informations permettant d'identifier le contenu C1 sont un identifiant fourni par le guide de programme et ainsi connu du serveur S et du dispositif D.

Lors d'une étape E4, la requête RQ1 est reçue par le module de communication ER du serveur S et l'unité de traitement UTS du serveur S commande l'enregistrement de la requête RQ1 reçue dans une mémoire, par exemple la mémoire MMS, du serveur S.

Lors d'une étape E6, le module d'enregistrement ENR du dispositif D enregistre un contenu multimédia CT1 à partir d'un flux multimédia F1 diffusé sur la chaîne FR2, à la date D1, entre les instants (Hd1-Ad) et (Hf1+Δf).

Δd et Δf sont des paramètres représentant des intervalles de temps ajoutés par le dispositif D pour prendre en compte d'éventuels décalages entre la programmation prévue dans le guide de programme pour le contenu C1 et l'horaire réel de diffusion du contenu C1.

Dans le mode de réalisation décrit, les paramètres Ad et Af sont fixes, par exemple 10 minutes.

A titre d'alternative, les paramètres Ad et/ou Af diffèrent d'un contenu à un autre en fonction du canal de diffusion et/ou en fonction de l'horaire de diffusion. Par exemple, des paramètres Ad et Af associés à chaque contenu du guide de programme sont transmis au dispositif D, par exemple une fois par jour. Ceci permet de prendre en compte les éventuels décalages de diffusion tout en limitant le temps d'enregistrement.

Dans le cas où la requête RQ1 contient un identifiant de contenu IC1, le serveur S obtient le canal de diffusion, la date et l'horaire de diffusion par lecture des informations associées à l'identifiant IC1 dans le guide de programmes.

A titre d'alternative, les horaires de début et de fin d'enregistrement sont saisis manuellement par l'utilisateur U. Dans ce cas, les horaires saisis par l'utilisateur prennent en compte les éventuels décalages et le dispositif D enregistre le contenu multimédia CT1 pendant la plage correspondant aux horaires saisis sans ajouter les intervalles de temps Ad et Af.

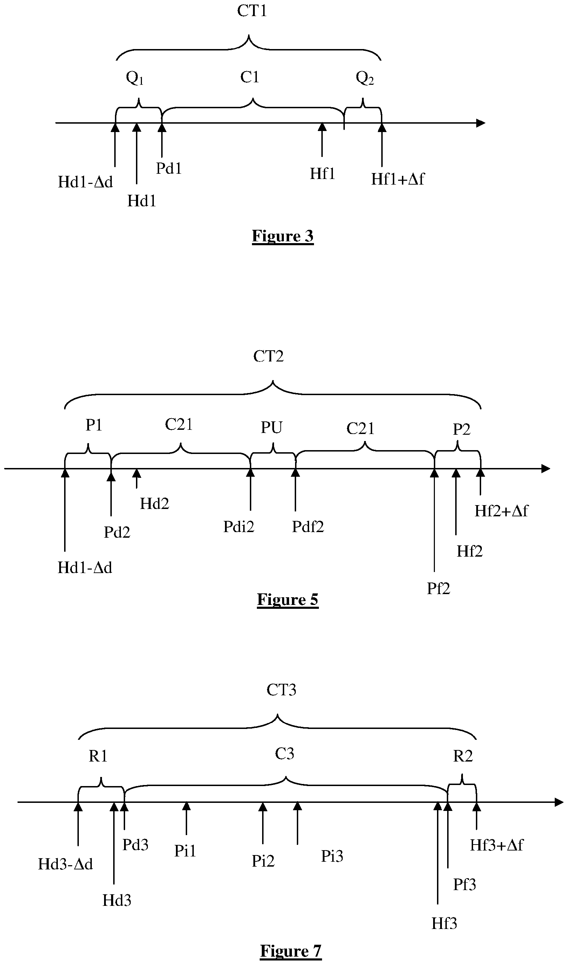

Comme illustré sur la figure 3, le contenu multimédia reçu CT1 contient trois contenus : un premier contenu Q1, le contenu demandé C1 et une deuxième contenu Q2.

Les contenus Q1 et Q2 correspondent à une partie du contenu total enregistré CT1, servant en tant que marge de sécurité, pour se prémunir contre une diffusion anticipée ou retardée du contenu C1 et garantir que l'intégralité du contenu C1 est effectivement enregistrée.

Lors d'une étape E8, réalisée en parallèle de l'étape E6, le module de réception TVS du serveur S reçoit le flux diffusé F1 contenant notamment le contenu multimédia C1.

Lors d'une étape E10, le module de détermination DET du serveur S détermine un index temporel Td1 relatif à une portion du contenu C1 incluse dans le flux F1 diffusé.

La portion de contenu repérée par cet index temporel est par exemple le début du contenu C1, la fin du contenu C1, une partie du contenu C1 ou encore la totalité du contenu C1.

L'index temporel Td1 déterminé est un index servant à repérer le début du contenu C1 dans le flux F1.

A titre d'alternative, le serveur S détermine plusieurs index temporels, par exemple un index servant à repérer le début du contenu C1 dans le flux F1 et un index permettant de repérer la fin du contenu C1 dans le flux F1.

Encore à titre d'alternative, un index comprend une première information permettant de repérer le début du contenu C1 et une deuxième information permettant de repérer la fin du contenu C1.

L'index est déterminé à partir d'une information sur l'instant de diffusion effective de la portion de contenu ou sur l'endroit d'insertion effectif de la portion de contenu dans le flux diffusé.

Cette information est obtenue par analyse d'au moins une partie du flux diffusé et repérage de ladite portion dans le flux diffusé.

L'information est par exemple déterminée manuellement par un opérateur, qui regarde le flux TV lors de sa diffusion ou une version enregistrée et qui indique les moments de début, de fin, etc.

A titre d'alternative, l'information est déterminée par une méthode de traitement de flux, par exemple la méthode décrite dans la demande internationale (PCT) publiée le 2 septembre 2010 sous le numéro WO 2010/097540.

L'information déterminée est ensuite repositionnée par rapport à un repère.

Le repère est par exemple un instant prédéterminé. L'index est ainsi défini par rapport à un instant prédéterminé.

L'instant prédéterminé est soit un instant connu du dispositif D et du serveur S, par exemple l'heure de diffusion prévue pour le contenu C1, soit un instant déterminé à partir d'une information transmise, par exemple dans la requête RQ1, par le dispositif D au serveur S. L'information transmise est par exemple l'heure de début d'enregistrement (Hd1-Δd).

Dans le mode de réalisation décrit, l'index temporel est défini par une valeur d'index VI qui est une durée calculée à partir de l'heure de début d'enregistrement (Hd1-Δd).

A titre d'alternative, le repère est un identifiant d'une image du flux diffusé. L'identifiant d'image est par exemple transmis par le dispositif D au serveur S dans la requête RQ1. Par exemple, l'identifiant transmis est l'identifiant de la première image enregistrée par le dispositif D.

Egalement à titre d'alternative, le repère est un repère absolu et l'index temporel est défini par exemple par une date. L'utilisation d'un horaire absolu, telle qu'une date exprimée en heures, minutes, secondes et millisecondes, suppose une synchronisation des horloges du dispositif D et du serveur S.

A titre d'alternative, l'index est formé d'un identifiant, par exemple un identifiant d'image ou de paquet. Dans ce cas, il n'est pas procédé au repositionnement dans un repère.

Lors d'une étape E12, le ou les index temporels déterminés, ou plus précisément la ou les valeurs d'index déterminées, sont envoyés par le module de communication ER du serveur S au module de communication COM du dispositif D.

A titre d'alternative, les index temporels sont envoyés au dispositif D sous la forme de plusieurs envois, par exemple au fur et à mesure de leur détermination.

A titre d'alternative, des informations complémentaires relatives à un ou plusieurs index sont transmises également lors de l'étape E12. L'information complémentaire relative à un index est par exemple un titre de la portion ou un identifiant qualifiant l'index. Par exemple, l'identifiant est un type d'index indiquant si l'index est un index de début ou de fin du contenu, ou du début ou de fin d'une portion de contenu.

Les index temporels sont reçus par le module de communication COM du dispositif D lors d'une étape E14 et enregistrés, par le module de traitement de requêtes TRQ, en association avec le contenu enregistré CT1 dans une mémoire M1 du dispositif D. Par exemple, les index temporels reçus pour le contenu CT1 sont enregistrés sous la forme d'un fichier.

Lors d'une étape ultérieure E16, le module de pilotage PLT du dispositif D reçoit une commande CM1 d'accès au contenu CT1 transmise par l'utilisateur au moyen, par exemple, de la télécommande Z.

Lors d'une étape E18, le module de traitement des requêtes TRQ du dispositif D accède à la mémoire M1 contenant l'index temporel Td1 associé au contenu enregistré CT1 et déduit de l'index Td1 une position Pd1 dans le contenu CT1.

Sauf dans le cas où l'index est formé d'un identifiant, par exemple un identifiant d'image ou de paquet, ou d'une valeur utilisable directement pour repérer une position dans le contenu enregistré, la déduction fait appel à une fonction de correspondance entre un index et une position dans le contenu enregistré.

La fonction de correspondance est par exemple une fonction linéaire qui repose sur la connaissance:
- d'une position de référence PR dans le contenu enregistré, exprimée par exemple en nombre d'images, de trames, de paquets, d'octets... depuis le début du contenu enregistré,
- d'une valeur de référence VR correspondant à cette position de référence, exprimée par exemple en horaire absolu ou en numéro d'image et enregistrée en association avec la position de référence PE,
- d'une facteur d'échelle FE existant entre une échelle servant à coder la valeur d'index et la valeur de référence, par exemple une échelle temporelle, et une échelle servant à coder une position dans le fichier, par exemple une échelle exprimée en nombre d'images. Par exemple, le facteur d'échelle FE est défini par le nombre d'images par seconde dans le flux diffusé.

Le facteur d'échelle sert à déterminer le décalage de la position à trouver dans le contenu par rapport à la position de référence, compte tenu du résultat de la comparaison de la valeur d'index avec la valeur de référence.

La valeur d'index reçue VI est comparée avec la valeur de référence VR. Cela suppose qu'elle doit être exprimée selon la même grandeur physique que la valeur de référence VR.

Par exemple, la position PI de l'index est obtenue par la formule: PI = (VI - VR) * FE + PR.

Si PR = première image du contenu enregistré CT1, VR= 10h10, V1=10h15 et FE=3000 images/minute alors PI = (10h15 - 10h10) * 3000 = 15 000ème image du contenu enregistré CT1.

La position Pd1 est par exemple calculée par rapport à la position de référence qui est le début d'enregistrement du contenu CT1 et en fonction de l'index temporel Td1.

Si l'index temporel Td1 est exprimé sous forme d'un horaire absolu, la position Pd1 est traduite en une durée ou un nombre d'images calculé par rapport au début de l'enregistrement du contenu CT1.

La position Pd1, correspond au début du contenu demandé C1 et est par exemple une durée ou un nombre d'images calculé à partir à l'instant Hd1-Ad correspondant au début de l'enregistrement du contenu enregistré CT1.

Dans le mode de réalisation décrit, la position coïncide avec l'index.

A titre d'alternative, un décalage est introduit par le dispositif D, par exemple pour prendre en compte un éventuel décalage d'horloges entre le dispositif D et le serveur S. Dans ce cas, la position ne coïncide pas exactement avec l'index. Par exemple, le décalage est de 1 milliseconde ou d'une ou plusieurs images.

L'étape E18 est suivie d'une étape E20 lors de laquelle, le module de lecture LEC du dispositif D commande la restitution du contenu CT1 à partir de la position Pd1 déterminée.

Ainsi, la restitution commence au début du contenu demandé C1 et non pas au début du contenu enregistré CT1.

Dans le cas où, le fichier contient également un index temporel de fin, le module de traitement des requêtes TRQ détermine, lors de l'étape E18, une position de fin de lecture à partir de l'index temporel de fin lu dans la mémoire M1 et la restitution est arrêtée lorsque la position de lecture courante coïncide avec la position de fin de lecture déterminée.

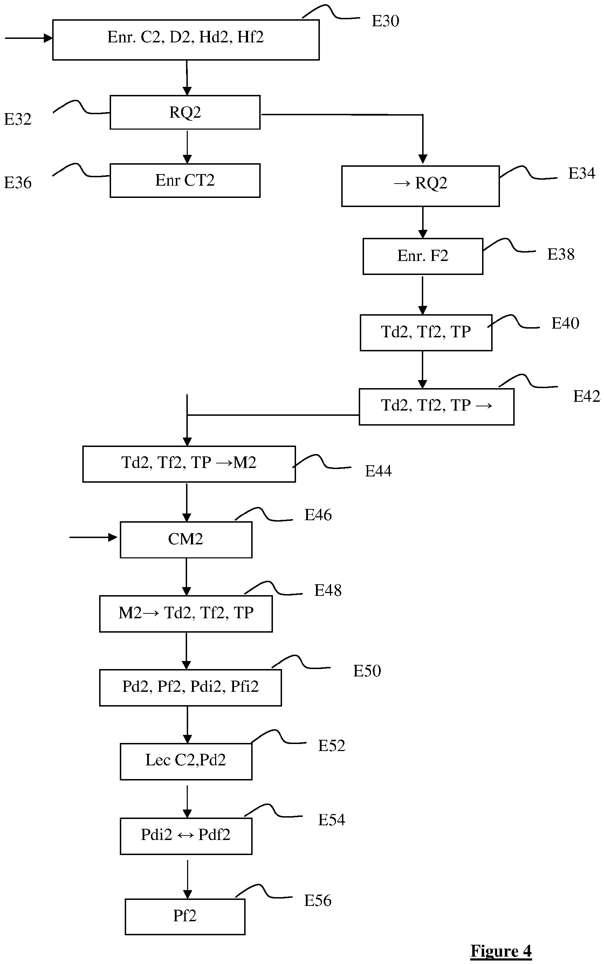

En référence aux figures 4 et 5, un deuxième mode de réalisation de l'invention mis en oeuvre dans le système SYS va maintenant être décrit.

En référence à la figure 4, lors d'une première étape E30, similaire à l'étape E0 décrite précédemment en relation avec le premier mode de réalisation, l'utilisateur commande l'enregistrement par le dispositif D d'un contenu C2. Le contenu C2 est par exemple un film. Le film C2 est ici un contenu en deux parties séparées par une plage de publicité.

A titre d'alternative, le contenu C2 est un film et un documentaire séparés par une plage de publicité.

L'étape E30 est suivie d'une étape E32 lors de laquelle, le dispositif D construit une requête RQ2 d'index temporels pour le contenu C2 et transmet la requête RQ2 au serveur S.

Lors d'une étape E34, la requête RQ2 est reçue par le serveur S.

Lors d'une étape E36, le dispositif D enregistre un contenu multimédia CT2 à partir d'un flux multimédia F2 diffusé sur un canal de diffusion, à une date D2, entre les instants (Hd2-Ad) et (Hf2+Δf).

Comme illustré sur la figure 5, le contenu multimédia CT2 contient un contenu P1 diffusé avant le contenu C2, une première partie C21 du contenu C2, une plage de publicité PU, une deuxième partie C22 du contenu C2 et un contenu P2 diffusé suite au contenu C2.

Les contenus P1 et P2 correspondent à une partie de flux enregistré en tant que marge de sécurité.

Lors d'une étape E38, réalisée en parallèle de l'étape E36, le serveur S reçoit le flux F2 diffusé.

Les étapes E32, E34, E36, E38 sont similaires respectivement aux étapes E2, E4, E6, E8 décrites en relation avec le premier mode de réalisation.

Lors d'une étape E40, le serveur S détermine trois index temporels Td2, Tf2, et TP relatifs au contenu C2 inclus dans le flux F2 diffusé.

L'index temporel Td2 est un index servant à repérer le début du contenu C2 dans le flux F2. L'index temporel Tf2 est un index servant à repérer la fin du contenu C2 dans le flux F2.

L'index temporel TP est un index intermédiaire servant à repérer la plage de publicité PU dans le flux F2. L'index temporel TP représente un index temporel servant à repérer une partie de contenu à ne pas restituer. L'index temporel TP comprend un premier index temporel Tu1 servant à repérer le début de la plage de publicité PU dans le flux F2 et un deuxième index temporel Tu2 servant à repérer la fin de la plage de publicité TU dans le flux F2.

A titre d'alternative, l'index temporel TP comprend un premier index temporel servant à repérer le début de la plage de publicité dans le flux F2 et une information relative à la durée de la plage de publicité dans le flux F2.

Lors d'une étape E42, similaire à l'étape E12, les index temporels déterminés Td2, Tf2, et TP sont envoyés par le serveur S au dispositif D.

Plus précisément, chaque index est transmis sous la forme d'une valeur d'index et d'un type d'index associé. Le type d'index associé à l'index Td2 est une valeur indiquant que l'index Td2 correspond à un début de contenu. Le type d'index associé à l'index Tf2 est une valeur indiquant que l'index Tf2 correspond à une fin de contenu. Le type d'index associé à l'index TP est une valeur indiquant que l'index TP correspond un contenu à ne pas diffuser.

Le type d'index représente un exemple d'information complémentaire associée à l'index.

Les index temporels Td2, Tf2, et TP sont reçus par le dispositif D lors d'une étape E44 et enregistrés en association avec le contenu enregistré CT2 dans une mémoire M2 du dispositif D.

Lors d'une étape ultérieure E46, le dispositif D reçoit une commande CM2 d'accès au contenu C2 transmise par l'utilisateur U.

Lors d'une étape E48, le dispositif D accède d'une part au contenu enregistré CT2 et d'autre part à la mémoire M2 contenant les index temporels Td2, Tf2 et TP associés au contenu enregistré CT2.

Lors d'une étape E50, le dispositif D déduit, à partir de l'index Td2, une position Pd2 de début de lecture dans le contenu CT2.

Lors de l'étape E50, le dispositif D déduit également, à partir de l'index Tf2, une position de fin de lecture Pf2 dans le contenu CT2.

A titre d'alternative, la position de fin de lecture Pf2 est une position relative par rapport à la position de début de lecture Pd2.

Lors de l'étape E50, le dispositif D détermine également, à partir de l'index TP, deux positions de lecture Pdi2 et Pfi2 dans le contenu CT2.

La position Pdi2 est une position de lecture déduite du premier index Tu1 et correspond au début de la plage de publicité PU dans le contenu CT2.

La position Pfi2 est une position de lecture déduite du deuxième index Tu2 et correspond à la fin de la plage de publicité PU dans le contenu CT2

L'étape E50 est suivie d'une étape E52 lors de laquelle le dispositif D commande la restitution du contenu enregistré CT2 à partir de la position de début de lecture Pd2 déterminée.

Lors d'une étape E54, réalisée lorsque la position de lecture courante du dispositif D correspond à la position Pdi2, le dispositif D remplace la position de lecture courante par la position de lecture Pfi2. Ainsi, la plage de publicité PU n'est pas restituée par le dispositif D.

Lors d'une étape E56, réalisée lorsque la position de lecture courante du dispositif D correspond à la position Pf2, le dispositif D commande l'arrêt de la restitution.

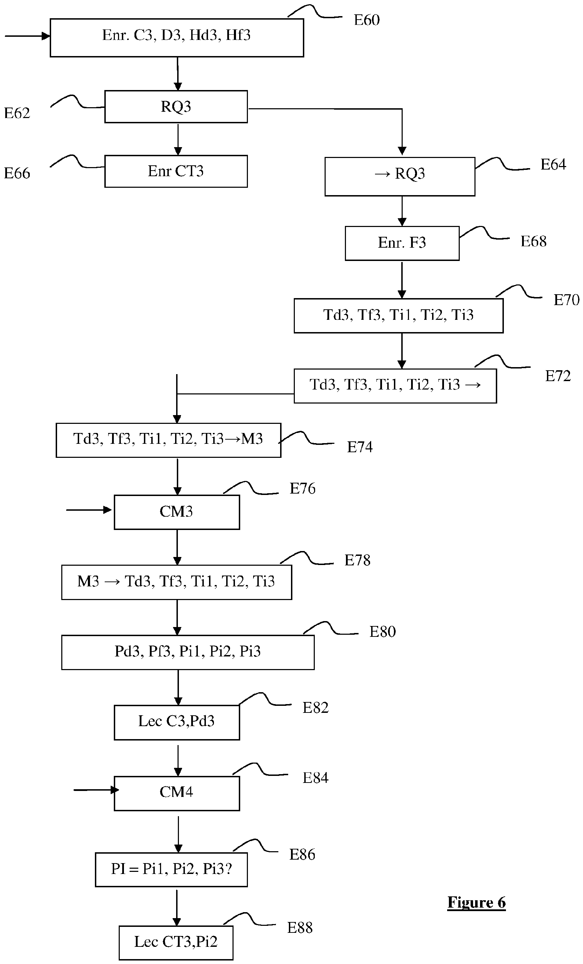

En référence aux figures 6 et 7, un troisième mode de réalisation de l'invention mis en oeuvre dans le système SYS va maintenant être décrit.

Comme illustré sur la figure 6, lors d'une première étape E60, similaire à l'étape E0 décrite précédemment en relation avec le premier mode de réalisation, l'utilisateur U commande l'enregistrement par le dispositif D d'un contenu C3. Le contenu C3 est par exemple un match de football.

L'étape E60 est suivie d'une étape E62 lors de laquelle le dispositif D construit une requête RQ3 d'index temporels pour le contenu C3 et transmet la requête RQ3 au serveur S.

Lors d'une étape E64, la requête RQ3 est reçue par le serveur S.

Lors d'une étape E66, le dispositif D enregistre un contenu CT3 à partir d'un flux multimédia F3 diffusé sur un canal de diffusion, par exemple une chaîne de télévision, à une date D3, entre les instants (Hd3-Ad) et (Hf3+Δf).

Comme illustré sur la figure 7, le contenu multimédia CT3 contient un contenu R1 diffusé avant le contenu C3, le contenu demandé C3 et un contenu R2 diffusé suite au contenu C3.

Les contenus R1 et R2 correspondent à une partie de flux enregistré en tant que marge de sécurité.

Lors d'une étape E68, réalisée en parallèle de l'étape E66, le serveur S reçoit le flux diffusé F3 contenant le contenu C3.

Les étapes E62, E64, E66, E68 sont similaires respectivement aux étapes E2, E4, E6, E8 décrites en relation avec le premier mode de réalisation.

Lors d'une étape E70, le serveur S détermine cinq index temporels Td3, Tf3, Ti1, Ti2 et Ti3 relatifs au contenu C3 inclus dans le flux F3 diffusé.

L'index temporel Td3 est un index servant à repérer le début du contenu C3 dans le flux F3. L'index temporel Tf3 est un index servant à repérer la fin du contenu C3 dans le flux F3.

Les index temporels Ti1, Ti2 et Ti3 sont des index intermédiaires servant à repérer des positions intermédiaires dans le contenu C3 inclus dans le flux F3.

Les index temporels Ti1, Ti2 et Ti3 correspondent à des moments particuliers du contenu C3, par exemple les moments importants du match de football, par exemple les buts du match.

A titre d'alternative, si le contenu C3 est un film, le ou les index intermédiaires correspondent aux instants déterminants du film, par exemple un meurtre.

Lors d'une étape E72, similaire à l'étape E12 décrite précédemment, les index temporels déterminés Td3, Tf3, Ti1, Ti2 et Ti3 sont envoyés par le serveur S au dispositif D.

Les index temporels Td3, Tf3, Ti1, Ti2 et Ti3 sont reçus par le dispositif D lors d'une étape E74 et enregistrés en association avec le contenu enregistré CT3 dans une mémoire M3 du dispositif D.

Lors d'une étape ultérieure E76, le dispositif D reçoit une commande d'accès au contenu CT3 transmise par l'utilisateur U, par exemple une commande d'accès à un menu.

Lors d'une étape E78, le dispositif D accède d'une part au contenu enregistré CT3 et d'autre part à la mémoire M3 contenant les index temporels Td3, Tf3, Ti1, Ti2 et Ti3 associés au contenu CT3.

Lors d'une étape E80, le dispositif D détermine, à partir de l'index Td3, une position de début de lecture Pd3 dans le contenu CT3.

Lors de l'étape E80, le dispositif D détermine également, à partir de l'index Tf3, une position de fin de lecture Pf3 dans le contenu CT3.

Egalement lors de l'étape E80, le dispositif D déduit des index Ti1, Ti2 et Ti3, trois positions de lecture Pi1, Pi2 et Pi3 dans le contenu CT3.

Chaque position Pi1, Pi2 et Pi3 correspond au début d'une portion du contenu C3.

L'étape E80 est suivie d'une étape E82 lors de laquelle, le dispositif D commande la restitution du contenu enregistré CT3 à partir de la position Pd3 déterminée, c'est-à-dire la restitution du contenu C3.

Lors d'une étape E84, le dispositif D reçoit une commande CM4 d'accès à un moment d'intérêt du contenu C3. La commande d'accès est par exemple une commande connue d'accès au chapitre suivant.

Lors d'une étape E86, le dispositif D compare la position courante de lecture PI avec les positions Pi1, Pi2 et Pi3 déterminées lors de l'étape E80.

Par exemple, il détermine que la position courante PI se situe entre la position Pi1 et la position Pi2. Il en déduit que la première position non encore atteinte est la position Pi2.

Lors d'une étape E88, le dispositif D positionne la position courante de lecture PI à la position Pi2 et reprend la restitution du contenu enregistré CT3, qui correspond ici à la restitution du contenu C3, à partir de cette nouvelle position courante.

Lors de la restitution du contenu C3, le dispositif D peut recevoir une commande de retour arrière (étape E84). Dans ce cas, lors de l'étape E88, le dispositif D positionne la position de lecture courante à la position intermédiaire Pi précédent la position de lecture courante PI ou à la position de début de lecture Pd3 s'il n'existe pas de position intermédiaire Pi précédent la position de lecture courante PI.

Ainsi, les index temporels permettent une navigation aisée dans le contenu C3.

La restitution est effectuée en fonction des index reçus pour le contenu. Une restitution peut être demandée alors que tous les index n'ont pas été reçus. Ceci est notamment le cas lorsque la détermination de certains index est effectuée par une analyse éditoriale. Lors de la réception des index reçus après une restitution, les index associés au contenu enregistré sont mis à jour dans la mémoire M3 et pris en compte lors d'une restitution ultérieure.

A titre d'alternative, une information complémentaire est associée à un ou plusieurs index, par exemple une information complémentaire est associée à chacun des index Td3, Ti1, Ti2 et Ti3. L'information complémentaire est ici un message d'information défini, par exemple, par un opérateur lors d'une analyse du contenu.

Par exemple, le message associé à l'index Td3 est « début », le message associé à l'index ti1 est « premier but », le message associé à l'index ti2 est « expulsion d'un joueur » et le message associé à l'index ti3 est « second but ».

Les informations complémentaires sont envoyées avec les index temporels Td3, Tf3, Ti1, Ti2 et Ti3 lors de l'étape E72.

Les index temporels Td3, Tf3, Ti1, Ti2 et Ti3 et les informations complémentaires associées sont reçus et enregistrés par le dispositif D lors de l'étape E74.

A la demande d'un utilisateur, ces informations complémentaires peuvent ensuite être affichées sur l'écran ECR, par exemple sous la forme d'une interface graphique permettant à l'utilisateur de choisir, au moyen de la télécommande Z, une de ces informations, et en conséquence un des index. Le dispositif D positionne alors la position de lecture courante à la position de lecture associée à l'index sélectionné.

A titre d'alternative, le contenu C3 est un document pouvant être découpé en chapitres et sous chapitres et les index reçus contiennent chacun une information servant à repérer un début de chapitre ou de sous chapitre et une information servant à repérer la fin de ce chapitre ou sous chapitre. Les chapitres et sous chapitres représentent des portions de contenus.

Dans une variante, chaque index est reçu avec une information complémentaire associée, qui est un titre du chapitre ou du sous chapitre. Les informations complémentaires peuvent ensuite être affichées sur l'écran ECR sous la forme d'un menu contenu dans une interface graphique et l'utilisateur peut obtenir la restitution d'un chapitre ou d'un sous chapitre en sélectionnant une des informations complémentaires. Cette variante permet une navigation aisée dans le contenu.

Dans les modes de réalisation décrits, la requête RQ1, RQ2 ou RQ3 est transmise avant la diffusion du contenu.

A titre d'alternative, la requête d'enregistrement contient outre les informations permettant d'identifier le contenu, un identifiant d'une image du flux multimédia, par exemple un identifiant de la première image. La requête est alors envoyée après le début de la réception du flux diffusé.

L'identifiant d'image transmis permet de synchroniser les repères temporels de début du flux enregistré par le dispositif D et par le serveur S.

Dans le cas où une restitution est demandée alors que tous les index n'ont pas été reçus, la restitution prend en compte uniquement les index reçus.

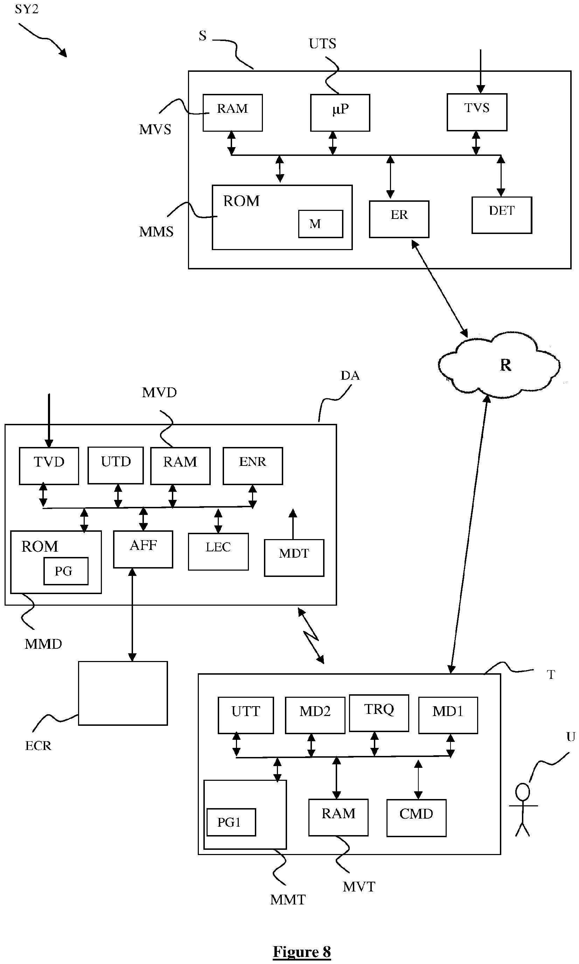

Un système SY2 apte à mettre en oeuvre le procédé de l'invention va maintenant être décrit en référence à la figure 8.

Le système SY2 comprend un serveur S, un dispositif d'accès DA et un terminal d'utilisateur T.

Le système SY2 comprend également un écran ECR, par exemple un écran de téléviseur, apte à être connecté au dispositif DA.

Le terminal d'utilisateur T est par exemple un terminal mobile, par exemple de type smartphone.

Le dispositif DA est par exemple un enregistreur numérique personnel, par exemple un PVR, un DVR ou encore un dispositif connu sous le nom de STB (pour 'Set Top Box' en anglais).

Le dispositif DA comporte de façon connue, notamment une unité de traitement UTD équipée d'un microprocesseur, une ou plusieurs mémoires mortes MMD de type ROM ou EEPROM, une mémoire vive MVD de type RAM.

Une mémoire MMD est par exemple un disque dur intégré dans le dispositif DA ou accessible par le dispositif DA.

Le dispositif DA comporte également un module TVD apte à recevoir un flux multimédia diffusé en continu via un canal de diffusion, par exemple, par une ou plusieurs chaines de télévision.

Le dispositif DA comporte également un module d'enregistrement ENR, un module de lecture LEC, un module de restitution AFF et un module de communication MDT avec le terminal d'utilisateur T via par exemple une liaison de communication sans fil, par exemple une liaison de type Wifi.

Le module d'enregistrement ENR est apte à enregistrer, en temps réel, dans une mémoire MMD, un contenu multimédia à partir d'un flux diffusé reçu par le module de réception TVD, en fonction d'une commande d'enregistrement reçue du terminal d'utilisateur T.

Le module de lecture LEC est apte à accéder à un contenu, soit un contenu reçu par le module de réception TVD, soit un contenu enregistré dans la mémoire MMD, et à le transmettre pour restitution au module de restitution AFF. De façon connue, la restitution d'un contenu multimédia consiste en l'affichage d'un contenu vidéo et/ou la restitution d'un signal audio.

Le module de restitution AFF est notamment apte à restituer un contenu reçu du module de lecture LEC sur l'écran ECR.

Le terminal d'utilisateur T comporte de façon connue, notamment une unité de traitement UTT équipée d'un microprocesseur, une ou plusieurs mémoires mortes MMT de type ROM ou EEPROM, une mémoire vive MVT de type RAM.

Une mémoire MMT est par exemple une carte mémoire amovible ou non, intégré dans le terminal T.

Le terminal d'utilisateur T comporte également un module de traitement de requêtes TRQ, un module de commande CMD, un premier module de communication MD1 avec le serveur S via un réseau de télécommunication R et un deuxième module de communication MD2 avec le dispositif DA via par exemple une liaison de communication sans fil, par exemple une liaison de type Wifi.

Le module de traitement de requêtes TRQ est apte à construire des requêtes d'index, à les transmettre au serveur S via le premier module de communication MD1 et à enregistrer les réponses aux requêtes reçues via le premier module de communication MD1.

Le module de commande CMD est apte à construire de commandes, par exemple des commandes d'enregistrement ou de restitution d'un contenu, et à les transmettre au dispositif DA.

La mémoire morte MMT comporte des registres mémorisant un programme d'ordinateur PG1.

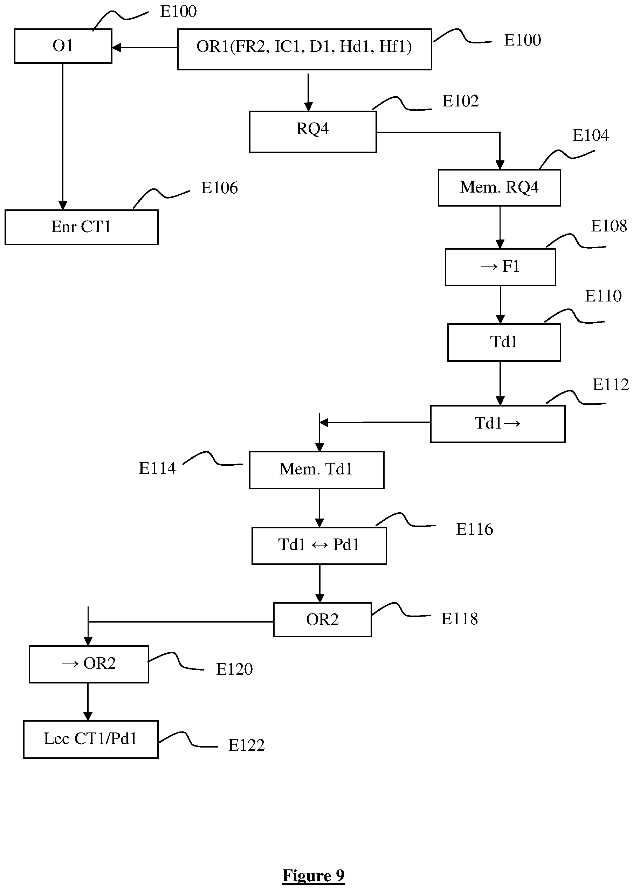

L'unité de traitement UTT est pilotée par le programme informatique PG1 afin de mettre en oeuvre notamment un procédé de commande de restitution d'un contenu multimédia selon un mode de réalisation de l'invention décrit ultérieurement en référence à la figure 9.

Le programme informatique PG1 comporte des instructions de code pour mettre en oeuvre notamment une étape de réception d'au moins un index temporel servant à repérer une portion dudit contenu dans un contenu multimédia enregistré à partir d'un flux multimédia diffusé, ledit au moins un index temporel étant défini après le début de l'enregistrement dudit contenu multimédia, et une étape de transmission d'une commande de restitution d'au moins une partie dudit contenu enregistré, ladite commande de restitution contenant au moins undit index temporel reçu.

Le serveur S comporte de façon connue, notamment une unité de traitement UTS équipée d'un microprocesseur, une ou plusieurs mémoires mortes de type ROM ou EEPROM MMS, une mémoire vive de type RAM MVS.

Le serveur S comporte également un module TVS de réception d'un flux multimédia diffusé, un module de détermination d'index temporels DET et un module de communication ER apte à dialoguer avec le terminal d'utilisateur T, via le réseau de télécommunication R.

Un mode de réalisation de l'invention mis en oeuvre dans le système SY2 va maintenant être décrit en référence à la figure 9.

Lors d'une étape E100, l'utilisateur U commande au moyen du terminal d'utilisateur T, l'enregistrement par le dispositif DA d'un contenu C1.

La commande d'enregistrement OR1 est par exemple construite par le module de commande CMD du terminal d'utilisateur T à partir d'informations saisies par l'utilisateur U au moyen d'une interface graphique affichée sur un écran du terminal d'utilisateur T.

La commande d'enregistrement OR1 contient par exemple un identifiant de la chaîne, par exemple FR2, un identifiant IC1 du contenu C1 à enregistrer, la date D1, un instant de début Hd1 et un instant de fin Hf1.

Les instants Hd1 et Hf1 tiennent compte d'éventuels décalages entre la programmation prévue dans le guide de programme pour le contenu C1 et l'horaire réel de diffusion du contenu C1.

La commande d'enregistrement OR1 est transmise par le deuxième module de communication MDD du terminal d'utilisateur T au module de communication MDT du dispositif DA qui la transmet ensuite au module de traitement de commande MTC du dispositif DA.

L'étape E100 est suivie d'une étape E102 lors de laquelle, le module de traitement de requêtes TRQ du terminal d'utilisateur T construit une requête RQ4 d'index temporels pour le contenu C1 et le premier module de communication MD1 du terminal T transmet la requête RQ4 au serveur S.

La requête RQ4 comporte des informations permettant au serveur S d'identifier le contenu C1. Par exemple, la requête RQ4 contient l'identifiant de canal, une date et un horaire de diffusion.

Lors d'une étape E104, la requête RQ4 est reçue par le module de communication ER du serveur S et l'unité de traitement UTS du serveur S commande l'enregistrement de la requête RQ4 reçue dans une mémoire, par exemple la mémoire MMS, du serveur S.

Lors d'une étape E106, l'unité de traitement de commandes UTD du dispositif DA commande l'exécution de la commande d'enregistrement OR1 et le module d'enregistrement ENR du dispositif DA enregistre un contenu multimédia CT1 à partir d'un flux multimédia F1 diffusé sur la chaîne FR2, à la date D1, entre les instants Hd1 et Hf1.

Comme illustré sur la figure 3, le contenu multimédia reçu CT1 contient trois contenus : un premier contenu Q1, le contenu demandé C1 et une deuxième contenu Q2.

Les contenus Q1 et Q2 correspondent à une partie du contenu total enregistré CT1, servant en tant que marge de sécurité, pour se prémunir contre une diffusion anticipée ou retardée du contenu C1 et garantir que l'intégralité du contenu C1 est effectivement enregistrée.

Lors d'une étape E108, le module de réception TVS du serveur S reçoit le flux diffusé F1 contenant notamment le contenu multimédia C1. Les étapes E106 et E108 sont exécutées simultanément.

Lors d'une étape E110, similaire à l'étape E10 du premier mode de réalisation, le module de détermination DET du serveur S détermine au moins un index temporel Td1 relatif à une portion du contenu C1.

Les index temporels sont déterminés par rapport à un repère.

le repère est par exemple un repère absolu et l'index temporel est défini par exemple par une date. L'utilisation d'un horaire absolu, tel qu'une date exprimée en heures, minutes, secondes et millisecondes, suppose une synchronisation des horloges du terminal T et du serveur S.

Lors d'une étape E112, le ou les index temporels déterminés, ou plus précisément la ou les valeurs d'index déterminées, sont envoyés par le module de communication ER du serveur S au premier module de communication COM du terminal d'utilisateur T.

A titre d'alternative, les valeurs d'index sont transmises au terminal T au fur et à mesure de leur détermination.

Egalement, à titre d'alternative, les valeurs d'index sont enregistrées et transmises en réponse à une requête du terminal T, émise par exemple lorsque l'utilisateur U souhaite la restitution du contenu

A titre d'alternative, des informations complémentaires relatives à un ou plusieurs index sont transmises également lors de l'étape E112. L'information complémentaire relative à un index est par exemple un titre de la portion ou un identifiant qualifiant l'index. Par exemple, l'identifiant est un type d'index indiquant si l'index est un index de début ou de fin du contenu, ou du début ou de fin d'une portion de contenu.

Les index temporels sont reçus par le premier module de communication MD1 du terminal T lors d'une étape E114 et enregistrés, par le module de traitement de requêtes TRQ, en association avec un identifiant du contenu C1 dans une mémoire du terminal d'utilisateur T.

Lors d'une étape E116, le module de commande CMD du terminal d'utilisateur T accède à la mémoire contenant l'index temporel Td1 associé au contenu enregistré CT1 et déduit de l'index Td1 une position Pd1 dans le contenu CT1.

Sauf dans le cas où l'index est formé d'un identifiant, par exemple un identifiant d'image ou de paquet, ou d'une valeur utilisable directement pour repérer une position dans le contenu enregistré, la déduction fait appel à une fonction de correspondance entre un index et une position dans le contenu enregistré.

Puis, le module de commande CMD construit une commande de restitution OR2 du contenu CT1 et la transmet au dispositif DA. La commande de restitution OR2 contient d'une part au moins une information permettant au dispositif DA d'identifier le contenu enregistré CT1, par exemple un identifiant du contenu C1, et d'autre part la position Pd1 déduite de l'index Td1.

A titre d'alternative, la commande de restitution OR2 comprend l'index temporel Td1 à la place de la position P1d et la position P1d est déduite de l'index temporel par le dispositif DA.

Lors d'une étape E118, la commande de restitution OR2 est transmise par le deuxième module de communication MDD du terminal T au dispositif DA.

Lors d'une étape E120, l'unité de traitement UTD du dispositif DA reçoit la commande OR2 de restitution du contenu CT1, via le module de communication MDT du dispositif DA..

L'étape E120 est suivie d'une étape E122 lors de laquelle, le module de lecture LEC du dispositif D commande la restitution du contenu CT1 à partir de la position Pd1 déterminée.

Ainsi, la restitution commence au début du contenu demandé C1 et non pas au début du contenu enregistré CT1.

Dans le cas où, le fichier contient également un index temporel de fin, le module de commande CMD détermine, lors de l'étape E116, une position de fin de lecture à partir de l'index temporel de fin et la position de fin de lecture est insérée dans la commande d'accès OR2. La restitution est arrêtée lorsque la position de lecture courante coïncide avec la position de fin de lecture déterminée.

A titre d'alternative, plusieurs index temporels sont reçus, par exemple un index de début d'une première partie de contenu et un index de début de deuxième partie de contenu et la commande de restitution contient une position déduite du deuxième index de début.

Les modes de réalisation exposés ci-dessus sont illustratifs de l'invention. L'invention concerne également toute combinaison de ces modes de réalisation.

## Revendications

1. Procédé d'accès à un contenu multimédia (CT1, CT2, CT3) enregistré à partir d'un flux multimédia diffusé (F1, F2, F3), **caractérisé en ce qu'**il comporte les étapes suivantes :
- réception (E14, E44, E74) d'au moins un index temporel (Td1, Td2, Tf2,Td3, Ti1) servant à repérer une portion dudit contenu dans le flux multimédia diffusé, ledit au moins un index temporel étant défini après le début de l'enregistrement dudit contenu multimédia;
- restitution (E20, E52, E82, E88) d'au moins une partie dudit contenu enregistré (CT1, CT2, CT3), à partir de et/ou jusqu'à une position dans ledit contenu multimédia enregistré déduite d'un dit index temporel.

2. Procédé d'accès selon la revendication 1 dans lequel l'index temporel sert à repérer le début, respectivement la fin, de ladite portion dudit contenu et dans lequel la restitution commence, respectivement s'arrête, à une position dans ledit contenu déduite dudit index temporel.

3. Procédé d'accès selon la revendication 1 dans lequel l'index temporel sert à repérer le début et la fin de ladite portion et dans lequel la restitution commence à une première position dans ledit contenu déduite dudit index temporel et s'arrête à une deuxième position dans ledit contenu déduite dudit index.

4. Procédé d'accès selon la revendication 1 **caractérisé en ce que** l'étape de réception comprend en outre la réception d'au moins un index temporel servant à repérer une partie de contenu à ne pas restituer et **en ce que**, lors de la restitution, ladite partie de contenu n'est pas restituée.

5. Procédé d'accès selon la revendication 1 dans lequel l'index est déterminé à partir d'une information sur l'instant de diffusion effective de la portion de contenu ou sur l'endroit d'insertion effectif de la portion de contenu dans le flux diffusé.

6. Procédé d'accès selon la revendication 1 dans lequel l'index temporel est défini par une durée écoulée lors de ladite diffusion par rapport à un instant prédéterminé.

7. Procédé d'accès selon la revendication 1 dans lequel l'index temporel est défini par un nombre d'images dans ledit contenu calculé par rapport à une image prédéterminée dudit contenu enregistré.

8. Procédé d'accès selon la revendication 1 **caractérisé en ce qu'**il comporte en outre une étape d'envoi, avant le début de l'enregistrement dudit contenu, d'une requête d'index temporel contenant un instant prédéterminé utilisé pour définir au moins un index temporel.

9. Procédé d'accès selon la revendication 1 **caractérisé en ce qu'**il comporte en outre une étape d'envoi d'une requête d'index temporel contenant un identifiant d'une image dudit contenu enregistré utilisé pour définir au moins un index temporel.

10. Procédé d'accès selon la revendication 1 dans lequel l'étape de réception comprend la réception d'au moins une information complémentaire associée à l'index temporel.

11. Procédé d'accès selon la revendication 1 dans lequel ledit au moins un index temporel est reçu dans une commande de restitution émise par un terminal distant.

12. Procédé de commande de restitution d'un contenu multimédia (CT1) enregistré à partir d'un flux multimédia diffusé (F1) **caractérisé en ce qu'**il comporte les étapes suivantes :
- réception (E114) d'au moins un index temporel (Td1) servant à repérer une portion dudit contenu dans le flux multimédia diffusé, ledit au moins un index temporel étant défini après le début de l'enregistrement dudit contenu multimédia;
- transmission d'une commande de restitution (E118) d'au moins une partie dudit contenu enregistré (CT1), à partir de et/ou jusqu'à une position dans ledit contenu déduite d'un dit index temporel, ladite commande de restitution contenant ladite position.

13. Dispositif (D) d'accès à un contenu multimédia (CT1, CT2, CT3) enregistré à partir d'un flux multimédia diffusé (F1,F2, F3), **caractérisé en ce qu'**il comporte :
- des moyens de réception (COM) d'au moins un index temporel servant à repérer une portion dudit contenu dans le flux multimédia diffusé, ledit au moins un index temporel étant défini après le début de l'enregistrement dudit contenu multimédia;
- des moyens de restitution (TRQ) d'au moins une partie dudit contenu enregistré, à partir de et/ou jusqu'à une position dans ledit contenu multimédia enregistré déduite d'un dit index temporel.

14. Terminal (T) **caractérisé en ce qu'**il comprend :
- des moyens de réception (MD1) d'au moins un index temporel servant à repérer une portion dudit contenu dans le flux multimédia diffusé, ledit au moins un index temporel étant défini après le début de l'enregistrement dudit contenu multimédia;
- des moyens de transmission d'une commande de restitution (MDD) d'au moins une partie d'un contenu multimédia (CT1) enregistré à partir d'un flux multimédia diffusé (F1), à partir de et/ou jusqu'à une position dans ledit contenu déduite d'un dit index temporel, ladite commande de restitution contenant ladite position.

15. Produit programme d'ordinateur comprenant des instructions pour mettre en oeuvre les étapes d'un procédé d'accès à un contenu multimédia selon la revendication 1, lorsqu'il est chargé et exécuté par un processeur.
